Europäisches Patentamt

European Patent Office

Office européen des brevets

(11) Publication number: **0 423 759 A2**

# EUROPEAN PATENT APPLICATION

(21) Application number: **90119913.3**

(22) Date of filing: **17.10.90**

(51) Int. Cl.5: **C08F 6/22, C08F 6/24**

(30) Priority: **18.10.89 JP 268984/89**
        **26.12.89 JP 334998/89**

(43) Date of publication of application:
     **24.04.91 Bulletin 91/17**

(84) Designated Contracting States:
     **BE DE FR GB IT NL**

(71) Applicant: **MITSUBISHI RAYON CO., LTD**
**3-19, Kyobashi 2-chome Chuo-ku**
**Tokyo(JP)**

(72) Inventor: **Suzuki, Fumio, c/o Central Research**
**Laboratories**
**Mitsubishi Rayon Co., Ltd., 20-1 Miyukicho**
**Otake-shi, Hiroshima-ken(JP)**
Inventor: **Fukuda, Yutaro, c/o Central**

**Research Laboratories**
**Mitsubishi Rayon Co., Ltd., 20-1 Miyukicho**
**Otake-shi, Hiroshima-ken(JP)**
Inventor: **Inada, Hiromasa, c/o Central**
**Research Laboratories**
**Mitsubishi Rayon Co., Ltd., 20-1 Miyukicho**
**Otake-shi, Hiroshima-ken(JP)**
Inventor: **Sato, Haruki, c/o Central Research**
**Laboratories**
**Mitsubishi Rayon Co., Ltd., 20-1 Miyukicho**
**Otake-shi, Hiroshima-ken(JP)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**W-8000 München 2(DE)**

(54) Production process of particulate polymer.

(57) A process is disclosed for the production of a particulate polymer which contains fine particles in a small amount and has a narrow particle size distribution. According to the process, a coagulant is added to a polymer latex which has been obtained by emulsion polymerization, and they are mixed together to form a polymer slurry. An organic liquid, said organic liquid being almost insoluble in water and incapable of dissolving the polymer but capable of wetting the polymer, is added to the polymer slurry, and they are mixed together to granulate polymer particles contained in the polymer slurry. At least one of the mixing step of the polymer latex and the coagulant and the mixing step of the polymer slurry and the organic liquid is conducted in a co-rotating twin-screw kneader.

FIG.7

# PRODUCTION PROCESS OF PARTICULATE POLYMER

## BACKGROUND OF THE INVENTION

1) Field of the Invention:

The present invention relates to a process for the production of a particulate polymer, and more specifically to a process for producing a particulate polymer, which contains fine particles in a small amount and having a narrow particle size distribution, by using a co-rotating twin-screw kneader.

2) Description of the Related Art:

A polymer latex obtained by emulsion polymerization generally contains polymer particles which have a particle size of 1 $\mu$m or smaller and exist in a state covered with an emulsifier and dispersed and suspended in water. Their particle sizes are too small to permit direct recovery of the polymer by solid-liquid separation. As a conventional method for recovering a polymer from such a polymer latex, it has been widely practiced (1) to use a spray drier so as to directly separate the polymer as a powdery or particulate material or (2) to mix a salt or acid with the polymer latex to coagulate, and then to heat the resultant mixture to solidify the polymer, followed by dewatering and drying to recover the polymer as a powdery or particulate material.

In order to control the particle sizes of the resulting polymer particles, it has also been proposed *inter alia* (3) to coagulate after dispersing and sphering a polymer latex in a specific solvent (Japanese Patent Application Laid-Open No. 68285/1977), (4) to add an organic liquid, which is almost insoluble in water and is incapable of dissolving the polymer but is capable of wetting the polymer, to a slurry obtained by coagulating a polymer latex so as to granulate the polymer (Japanese Patent Publication No. 5610/1984), (5) to mix an organic liquid, which is almost insoluble in water and is incapable of dissolving the polymer but is capable of wetting the polymer, with a polymer latex in the presence of a coagulant (Japanese Patent Publication No. 5611/1984), or (6) to disperse droplets of a polymer latex in a coagulating atmosphere by using a spray drier system, thereby semi-coagulating the polymer, and then to solidify the polymer in a coagulating liquid, followed by dewatering and drying (Japanese Patent Application Laid-Open No. 95905/1981).

Method (1), which uses a spray drier, is however accompanied by the problems that a great deal of drying energy is required because a polymer latex containing a large amount of water is dried as is and a lot of water has to be evaporated, that variations tend to occur among the sizes of droplets sprayed and the particle size distribution thus becomes wide, that difficulties are encountered in controlling the particle size and/or bulk specific gravity, and that a high initial cost is required.

Method (2) featuring coagulation and solidification involves the problems that, when a conventional coagulation and solidification apparatus of the tank or column type is used, the resulting particulate polymer has a broad particle size distribution and fine particles are hence mixed in a large proportion to impair the handling characteristic of the particulate polymer, and especially, fine particles of about 40 $\mu$m or smaller are mixed in a proportion of several percent by weight in the whole particles thereby producing dust. This method is unable to reduce the average particle size to 150 $\mu$m or smaller.

Method (3) allows, by sphering, control of the particle size distribution and average particle size in a particle size range of 100 $\mu$m and greater. This control is however difficult for particle sizes smaller than 100 $\mu$m. After the sphering treatment, it is necessary to treat a large amount of solvent used.

Further, spherical latex particles are coagulated from exterior so that their coagulation does not take plate uniformly, resulting in a potential problem of fish eyes upon processing of the polymer. Method (4) is used to produce a particulate polymer having a narrow particle size distribution. It is however unable to control the particle size as desired while retaining the narrow range of the particle size distribution. Although not so serious as in method (3), method (4) is also accompanied by the drawback that an organic liquid is added in an amount of 60-500 parts by weight per 100 parts by weight of the polymer and a large amount of the organic liquid must hence be treated. Method (5) is also used to produce a particulate polymer having a narrow particle size distribution. It is however unable to control the average particle size as desired while retaining the narrow range of the particle size distribution. Method (5) is also accompanied by the drawback that an organic liquid is added at a volume ratio of 1-5 relative to the volume of the polymer and a large amount of organic liquid must hence be treated.

In addition, methods (4) and (5) include an unstable granulation step in that the apparent viscosity of the mixture rapidly increases for a while after the addition of the organic liquid in spite of the inclu sion of a suspension stabilizer and surfactant because the addition of the organic liquid is batchwise. Accordingly, the particle size distribution of particles to be produced is significantly affected by the revolution speed of the stirrer, the shape of the stirrer, the amount of the organic liquid used, etc., thereby making it difficult to produce, in a large volume and at a low cost, particles with a controlled particle size distribution and bulk specific gravity. Batchwise granulation shows a different granulation behavior from continuous granulation in which an organic liquid is fed continuously. Batchwise granulation may be described as a different technique from continuous granulation.

Method (6) permits easy formation of a spherical particulate material because it is identical in mechanism to spray drying. It is however accompanied by the drawbacks that there is a limitation to the size of particles and that a large apparatus is required due to the coagulation taking place in a vapor phase.

On the other hand, the automation of metering of powder and the increased size of storage and transportation facilities are being employed. From the standpoint of avoiding the caking of powder particles during storage or the clogging of transportation lines due to insufficient flowability of powder, there is a strong demand for the development of a granular polymer which is easy to handle. Further, there is an increasing demand for resins having special and/or enhanced functions. Since the latter demand may not be met by a single polymer in many instances, the polymer is often used together with one or more other polymers and one or more modifiers. In this case, it is necessary to control their particle sizes suitably so as to avoid variations in compositions due to segregation of the particulate materials in the course of storage or transportation.

When a polymer is used in the form of a mixture with one or more other materials, on the other hand, the uniformity of the mixture is enhanced by melting, mixing and kneading them in an extruder or the like. For this application, it is necessary to make the particulate polymer as small as possible so as to reduce as much as possible the proportion of particles of 40 $\mu$m or smaller, which adversely affect the handling property of the particulate polymer, and at the same time to facilitate its dispersion upon mixing. There is a strong desire to develop a method for controlling the particle size of a particulate polymer, allowing control of the average particle size while maintaining the particle size distribution narrow as described above.

As a production process of a particulate polymer which process can overcome the problems of the above methods (1)-(6) and can satisfy the requirements described above, the present inventors have already proposed a process for continuously granulating polymer particles by adding a polymer slurry, which has been obtained by coagulating a latex of a polymer, with an organic liquid, said organic liquid being almost insoluble in water and incapable of dissolving the polymer but capable of wetting the polymer, and mixing them together, wherein the temperature and the ratio of water to the organic liquid are controlled within their corresponding specific ranges at the time of the mixing (PCT/JP88/00974).

However, the application of the production process of PCT/JP88/00974 to polymer latexes of a certain type, especially to copolymer latexes containing a rubber component in a large amount and the use of a stirring tank as a coagulation apparatus have been found to develop the problem that the coagulation step becomes unstable. Namely, when the solid concentration of a polymer slurry is increased at the time of the coagulation in order to improve the productivity, the coagula tion temperature drops or the concentration of a coagulant becomes low, the viscosity of the slurry increases thereby to develop the instability that the transfer of the slurry becomes difficult and the coagulation apparatus tends to become blocked.

Further, when a latex containing a rubber component in such a large amount was coagulated in a coagulation apparatus in the form of a stirring tank, polymer particles (coagulated particles) formed by the coagulation became as large as several hundreds micrometers or greater. As a result, difficulties were encountered upon dispersion of the thus-obtained polymer particles in another material when the polymer particles were mixed with the material, leading to the problem that the external appearance of the product, namely, the resulting resin composition was impaired.

In addition, copolymers and graft polymers, which contained a rubber component in a large amount, involved the problem that granular polymers having large bulk specific gravity and good flowability were not available unless an organic liquid was used in a large amount.

## SUMMARY OF THE INVENTION

An object of the present invention is to provide a process for the production of a particulate polymer, which process is suitable for the continuous production of a particulate polymer containing fine powder in a small amount and having a narrow particle size distribution.

In one aspect of the present invention, there is thus provided a process for producing a particulate polymer by adding a coagulant to a polymer latex, said latex having been obtained by emulsion polymerization, and mixing the coagulant and polymer latex together to form a polymer slurry, and then adding an organic liquid, said organic liquid being almost insoluble in water and incapable of dissolving the polymer but capable of wetting the polymer, to the polymer slurry and mixing the organic liquid and the polymer slurry together to granulate polymer particles contained in the polymer slurry. At least one of the mixing step of the polymer latex and the coagulant and the mixing step of the polymer slurry and the organic liquid is conducted in a co-rotating twin-screw kneader.

## BRIEF DESCRIPTION OF THE DRAWINGS

FIG. 1 is a plan view of an exemplary co-rotating twin-screw kneader useful in the practice of the present invention, which kneader is of the type that both screws rotate in the same direction;

FIG. 2 is a front view of the kneader of FIG. 1;

FIG. 3 is a cross-sectional view of the kneader of FIG. 1, taken at an inlet for raw materials in the direction of arrows III-III of FIG. 1;

FIGS. 4(a) and 4(b) illustrate typical examples of screw elements usable in the co-rotating twin-screw kneader, in which FIG. 4(a) shows a double flighted screw element and FIG. 4(b) depicts a triple flighted screw element;

FIGS. 5(a) through 5(e) show representative shapes when a screw element of the double flighted type is divided into five types in accordance with their respective functions;

FIG. 6 is a perspective view showing a combination of screw elements; and

FIGS. 7, 8, 9 and 10 are flow charts of apparatus employed in examples of the present invention.

## DETAILED DESCRIPTION OF THE PREFERRED EMBODIMENTS

The process of this invention for the production of a particulate polymer comprises a step in which a coagulant is added to a polymer latex, which has been obtained by emulsion polymerization, and they are mixed together to form a polymer slurry (hereinafter called the "coagulation step") and another step in which an organic liquid, which is almost insoluble in water and incapable of dissolving the polymer but capable of wetting the polymer, is added to the thus-obtained polymer slurry and they are mixed together to granulate the polymer particles contained in the polymer slurry (hereinafter called the "granulation step"). At least one of these steps is conducted using a co-rotating twin-screw kneader (a twin-screw kneader in which both screws rotate in the same direction).

It is hence possible to conduct the coagulation step in a co-rotating twin-screw kneader and to practice the subsequent granulation step in a conventional granulating apparatus equipped with a mixing function, for example, in a stirring tank of the overflow type. Conversely, it is also possible to perform the coagulation step in a mixing tank equipped with a stirring blade and the subsequent granulation step in a co-rotating twin-screw kneader. As a further alternative, the coagulation step and the granulation step can each be conducted in a co-rotating twin-screw kneader. In this case, the coagulation step and the granulation step may be continuously conducted by commonly using a single co-rotating twin-screw kneader, or may be conducted by using separate co-rotating twin screw ex truders.

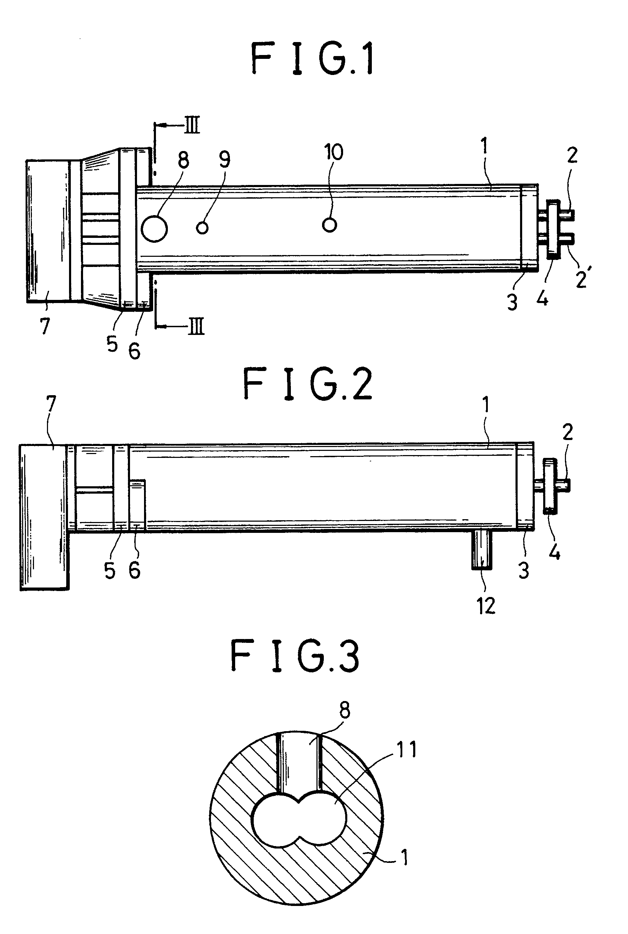

FIGS. 1-3 illustrate an exemplary co-rotating twin-screw kneader usable in the practice of the present invention.

In the process of the present invention, a co-rotating twin-screw kneader which is equipped with two screws and a barrel having an 8-figured cross-section is employed. Kneaders having only one screw or single-screw extruders do not have sufficient ability to transfer a polymer slurry, so that they cannot provide desired polymer particles.

Further, the twin-screw kneader employed in the process of the present invention must be of the type that both screws rotate in the same direction and have a self-cleaning function. In the case of a counter-rotating twin-screw kneader or a counter-rotating extruder in which both screws rotate in different directions, a self-cleaning function can hardly be imparted to the screws so that the polymer in a polymer slurry tends

4

to stick to screw surfaces and to block the interior of the kneader, thereby making it difficult to perform a stable operation.

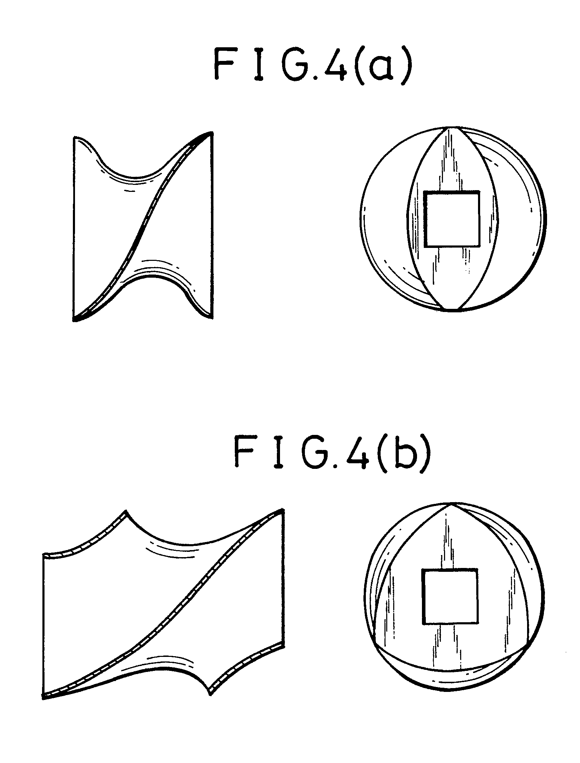

As screws to be arranged inside the kneader, it is possible to use double flighted screws such as those shown in FIG. 4(a) or triple flighted screws such as those depicted in FIG. 4(b). Double flighted screws are preferred as they allow the kneader to have a larger hold-up quantity.

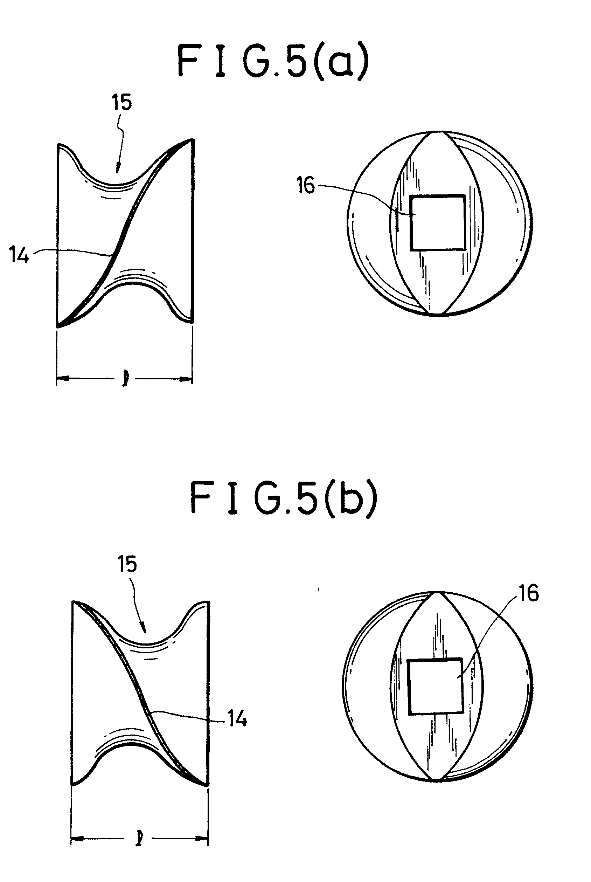

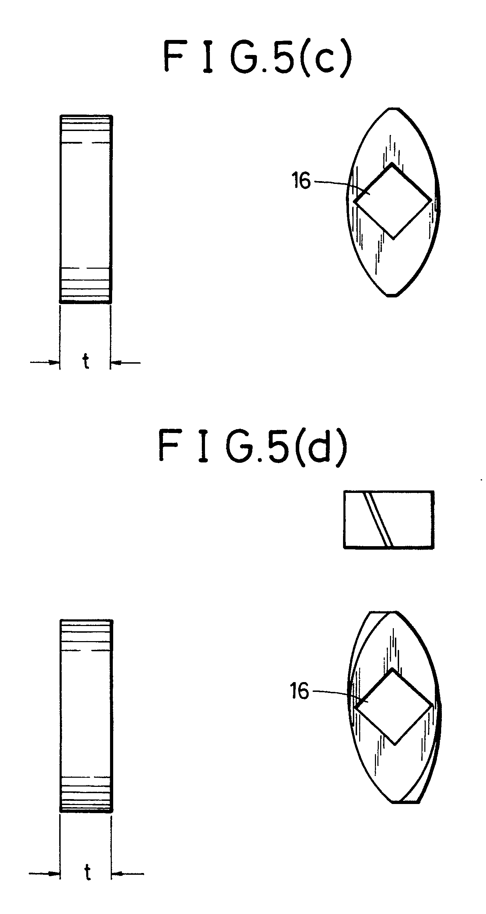

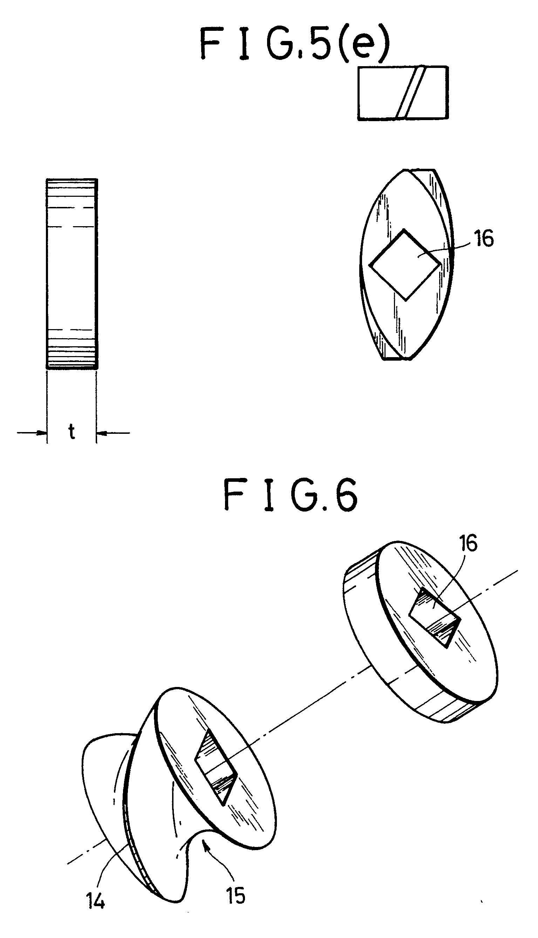

In general, screw elements can be roughly divided into five types in accordance with their functions, including (1) forward transfer, (2) backward transfer, (3) kneading, (4) forward transfer and kneading, that is, the combination of both the function (1) and the function (3), and (5) backward transfer and kneading, that is, the combination of both the function (2) and the function (3). Representative shapes of these five types of screw elements are shown in FIGS. 5(a) through 5(e), respectively. In these drawings, there are shown a screw flight land 14, a screw channel 15 and a screw shaft bore 16.

As the screw element located at a position (hereinafter called the "raw material inlet") where a polymer latex, a coagulant, a polymer slurry and an organic liquid are fed into the co-rotating twin-screw extruder, the forward transfer element (1) or the forward transfer and kneading element (4), said elements (1) and (4) having a transfer function in the forward direction, is preferred. The forward transfer element (1) is especially preferred.

Regarding the length of the screws of the co- rotating twin-screw kneader, the ratio L/D is preferably 2 or greater in which L is the length of the screws and D is the outer diameter of the screws. It is however difficult to fabricate the kneader if its length is excessively large. An L/D ratio of 40 or smaller, especially of 20 or smaller is therefore preferred.

If sufficient residence time cannot be provided by a single twin-screw kneader alone, it is preferable to connect in series two or more co-rotating twin-screw kneaders. It is also feasible to use a mixing tank of the over-flow type by connecting it after the twin-screw kneader. In the present invention, the co-rotating twin screw kneader includes a so-called co-rotating twin-screw extruder in which both screws rotate in the same direction.

It is desirable to maintain the revolution speed of the screws at 5 cm/sec or faster, and preferably at 20 cm/sec or faster as measured at the screw portion in contact with the inner wall of the barrel in order to enhance the mixing effects by the screws. It is generally desired to set the revolution speed at 2,000 rpm or slower, although the upper limit of the screw revolution speed is determined by the mechanical strength of the kneader.

The particle size of the particulate polymer in its final form can be controlled by the construction and revolution speed of the screw elements of the co-rotating twin-screw kneader, which kneader is employed for the mixing of the polymer latex and the coagulant. The particle size becomes smaller as the proportion of the screw element (c) in FIG. 5 is increased and as the kneading action is made stronger. When the construction of the screw elements is unchanged, the particle size also becomes smaller if the screw revolution speed is reduced, resulting in the prolongation of the residence time.

The polymer latex to be used in the practice of this invention can be prepared by any routine emulsion polymerization method and contains an emulsifier, a polymerization initiator, one or more other polymerization aids, etc. The polymer latex can be any one of homopolymer latexes, copolymer latexes and graft copolymer latexes.

As examples of homopolymer and copolymer latexes, mention may be made of latexes of homopolymers and copolymers of monomers, for example, aromatic vinyl compounds such as styrene, dichlorostyrene and α-methylstyrene; vinyl cyanide compounds such as acrylonitrile and methacrylonitrile; alkyl (meth)acrylates such as methyl (meth)acrylate, ethyl (meth)acrylate and butyl (meth)acrylate; vinyl compounds such as acrylic acid, vinyl chloride, vinylidene chloride and vinyl acetate; conjugated diolefins such as butadiene, chloroprene and isoprene, and derivatives thereof; and ethylene glycol; as well as latex mixtures of these polymers.

As graft copolymer latexes, mention may be made of those obtained by grafting a monomer or monomer mixture, which can form a hard polymer, on an elastic backbone polymer.

Exemplary elastic backbone polymers constituting graft copolymer latexes include diene polymers such as polybutadiene, polyisoprene and polychloroprene; polymers of acrylic acid esters, e.g., $C_{4-10}$-alkyl acrylates such as butyl acrylate and octyl acrylate; ethylene-propylene-non-conjugated diene copolymers; silicone rubber polymers obtained by the polymerization of dimethylsiloxane or the like; and copolymers of the above-exemplified monomers and monomers copolymerizable therewith. Exemplary copolymerizable monomers include aromatic vinyl compounds such as styrene and α-methylstyrene; alkyl methacrylates such as methyl methacrylate and ethyl methacrylate; $C_{1-3}$-alkyl acrylates such as methyl acrylate and ethyl acrylate; and vinyl cyanide compounds such as acrylonitrile and methacrylonitrile. As monomers capable of forming hard polymers, may be mentioned aromatic vinyl monomers such as styrene and α-methylstyrene;

5

alkyl methacrylates such as methyl methacrylate, ethyl methacrylate and butyl methacrylate; vinyl cyanide compounds such as acrylonitrile and methacrylonitrile; and vinyl halides such as vinyl chloride and vinyl bromide. These monomers may be used either singly or in combination.

No particular limitation are imposed on the coagulant which is used in this invention. Any commonly used coagulant can be employed. Examples of the coagulant include metal salts such as sodium chloride, calcium chloride, magnesium chloride, sodium sulfate, aluminum sulfate, zinc sulfate, magnesium sulfate, sodium carbonate, sodium hydrogencarbonate, ammonium chloride and potassium alum; acids such as sulfuric acid, hydrochloric acid, phosphoric acid, nitric acid, carbonic acid and acetic acid; and alcohols such as methanol and ethanol. They may be used either singly or in combination. No particular limitation is imposed on the amount of the coagulant to be added. The coagulant is usually added in an amount of about 0.05-50 wt.% based on the solid content of the polymer latex. About 0.1-20 wt.% is preferred.

When the coagulant is added to the polymer latex, the emulsified state of the polymer latex is disrupted so that the polymer particles emulsified and dispersed in the polymer latex coagulate together into particles (hereinafter abbreviated as "coagulated particles") and the coagulated particles are then dispersed in water as the dispersion medium of the polymer latex so as to form a slurry (hereinafter called the "polymer slurry").

In the process of the present invention, the coagulated particles are collected by an organic liquid and are granulated in the granulation step. Thus, if coarse particles are mixed with the coagulated particles, the particulate polymer produced by the granulation step tends to contain a certain amount of coarse particles. In order to produce a particulate polymer having a narrow particle size distribution, it is necessary to obtain coagulated particles containing almost no coarse particles in the coagulation step. In particular, a polymer latex containing a large amount of a rubber component tends to form coarse coagulated particles easily in the coagulation step.

In the process of the present invention, the formation of coarse particles is prevented through the use of a co-rotating twin-screw kneader as the coagulation equipment for polymer latexes which easily form coarse coagulated particles. As a result, it is now possible to obtain particulate polymers containing almost no coarse particles.

The time required for the coagulation is very short and generally ranges from 0.05 minute to 1 hour in terms of average residence time. If the coagulation time is shorter than 0.05 minute, coagulation is incomplete and the uncoagulated latex flows into the next step and tends to render the granulation unstable. Such a short coagulation time is therefore not preferred. Coagulation times longer than 1 hour require an unduly large apparatus and therefore are not preferred either.

When the coagulation step is conducted using a co-rotating twin-screw kneader, it is preferable to control the average residence time in the twin-screw kneader within about 0.05 minute to about 5 minutes.

In the production process of the present invention, an organic liquid which is almost insoluble in water and cannot dissolve the polymer but can wet the polymer (hereinafter simply called the "organic liquid" for the sake of brevity) is added to the above-described polymer slurry so that the polymer particles contained in the polymer slurry are granulated.

The term "almost insoluble" as used herein in respect of the organic solvent which cannot dissolve but can wet the polymer means that the solubility in water at $20°$C is 0.5 wt.% or lower, with 0.1 wt.% or lower being more preferred. By the term "wet" is meant that the angle of adhesion on the surface of the polymer is not greater than $30°$. An organic liquid whose solubility exceeds 0.5 wt.% has a low interfacial tension with water, and aggregating forces based on "liquid bridge force", which are substantially proportional to the interfacial tension, are reduced so that the organic liquid is required in a larger amount to obtain greater aggregating forces. Such an organic liquid is hence not preferred. Furthermore, when the solubility is high, a large amount of the organic liquid is dissolved in the water phase so that the amount of the organic liquid adsorbed on coagulated particles to produce "liquid bridge force" is reduced. Moreover greater facilities are required to treat the organic liquid dissolved in water.

The polymer-dissolving power of an organic liquid cannot be indicated quantitatively. For the sake of convenience, an organic liquid can be selected in the manner to be described below. The polymer in question is formed into particles having a diameter of about 1 mm or into pellets having a length of about 1 mm per side and is then added to 10 times by weight of the organic liquid, followed by stirring for about 1 hour. When the polymer is dissolved in the organic liquid to form a homogeneous phase or the polymer is partly dissolved in the organic liquid to increase the viscosity of the organic liquid by at least 10 % above its original viscosity at this stage, the organic liquid cannot be used for the polymer as an organic liquid for practicing this invention. Even when the viscosity increase is not 10 % or greater, the organic liquid cannot be used for the polymer as an organic liquid for practicing this invention if the particulate or pellet-like polymer subjected to solid-liquid separation from the organic liquid forms together like a millet-and-rice cake or the weight of the polymer increases by 50 % or greater compared with its initial weight, after a 1 minute centrifugal separation of a solvent by a centrifugal force of 100 G.

Illustrative examples of the organic liquid usable in this invention include paraffinic hydrocarbons such as pentane, hexane and heptane; alicyclic hydrocarbons such as cyclopentane, cyclohexane, methylcyclopentane and methylcyclohexane; and their alkyl-substituted derivatives, although they differ depending on the polymer for which they are used. These organic liquids may be used either singly or in combination.

The organic liquid may be used in a range of 15-200 parts by weight, preferably at least 20 parts by weight but less than 60 parts by weight per 100 parts by weight of the polymer in the polymer latex. Any amounts smaller than 15 parts by weight are too small to fully exhibit the effect of granulating coagulated particles, so that more fine powder tends to occur thereby making it difficult to control the particle size distribution. On the other hand, any amounts in excess of 200 parts by weight result in unstable dispersion of granulated particles due to the existence of the organic liquid in a great amount, so that rejoining of the particles takes place and coarse particles tend to occur. It is also necessary to evaporate a large amount of the organic liquid after the granulation step, so that use of the organic liquid in such a large amount is disadvantageous from the standpoint of energy cost. The weight of the polymer in the polymer latex can be determined by coagulating the polymer latex with the aforementioned coagulating agent, heating the thus-coagulated polymer latex to conduct a solidification treatment, drying the resultant polymer and then measuring the weight of the polymer. The polymer weight obtained in this manner may include the weights of an emulsifier and polymerization aids such as an initiator added at the time of the emulsion polymerization in some instances. Since the polymer containing these emulsifier and polymerization aids is granulated in this invention, the polymer weight determined in the above-described manner is used as a polymer weight upon calculation of the amount of the organic liquid or the weight proportion of the polymer in the whole mixture. This polymer weight may be commonly called the "solid content of the polymer" in some instances.

The desirable proportion of water in the whole mixture in the granulation step of the present invention may desirably be 30-85 wt.%, with a range of 50-75 wt.% being more preferred. Further, the proportion of the polymer in the whole mixture may desirably be in a range of 10-50 wt.%.

If the proportion of water in the whole mixture is smaller than 30 wt.%, the apparent viscosity of the whole mixture increases so that coarse particles tend to be formed. If the proportion of water in the whole mixture exceeds 85 wt.%, the resulting particulate polymer has a lowered bulk specific gravity and a still greater amount of water must be treated, leading to the drawback that larger treatment facilities are required.

Polymer proportions smaller than 10 wt.% in the whole mixture result in the same drawback as that brought about when the proportion of water in the whole mixture exceeds 85 wt.%. Polymer proportions greater than 50 wt.% in the whole mixture lead to similar difficulties as in water proportions smaller than 30 wt.% in the whole mixture.

In the granulation step, it is desirable to conduct granulation by holding the mixture of the polymer slurry and the organic liquid for an average of 5 seconds to 1 hour in a temperature range T ($^\circ$C) of the following formula:

A-40 $\leqq$ T $\leqq$ A

preferably, A-30 $\leqq$ T $\leqq$ A

more preferably, A-25 $\leqq$ T $\leqq$ A

wherein A means the azeotropic temperature ($^\circ$C) of the mixture.

When the granulation step is conducted using a co-rotating twin-screw kneader, it is preferable to hold the mixture for an average of 5 seconds to 5 minutes at a temperature in the range T ($^\circ$C) of the above formula within the co-rotating twin-screw kneader.

The term "azeotropic temperature" means the lowest temperature at which the mixture boils, and is determined in the following manner. Volatile in the mixture primarily consists of two components which are water and the organic liquid. Since these two components are substantially not dissolved in each other, the overall vapor pressure of the mixture is indicated by the sum of the vapor pressures of the individual components in their pure form. The temperature at which the overall vapor pressure becomes equal to the total pressure on the surface of the liquid is the azeotropic temperature A of the mixture.

If the temperature T is lower than A-40 ($^\circ$C), the speed of granulation becomes extremely slow, so that ungranulated fine powder tends to occur. If the temperature T exceeds the azeotropic temperature A ($^\circ$C) of the mixture, the mixture boils whereby the stable stirring operation is no longer feasible thereby forming coarse particles and making it difficult to control the particle size distribution. If the average granulating time is shorter than 5 seconds, the granulation is insufficient so that fine powder tends to occur. If the average granulating time exceeds 1 hour, an unduly large granulating apparatus is required. Such an unduly short or long average granulating time is hence disadvantageous from the viewpoint of productivity.

When the granulation step of the process according to this invention is practiced using a co-rotating twin-screw kneader, it is possible to produce a particulate polymer having excellent powdery properties compared to those produced by conventional methods such as methods which utilize a stirring tank. In particular, when a granulation apparatus in the form of a stirring tank is employed for a copolymer or graft polymer containing a large rubber component, a particulate polymer having a large bulk specific gravity and good flowability is not available unless a large quantity of organic liquid is used. However, it is possible to produce particulate polymers having a large bulk specific gravity and good flowability even for copolymers or graft polymers containing a large rubber component, if the granulation step is carried out with a co-rotating twin-screw kneader.

When the granulation step of the process according to this invention is practiced using a co-rotating twin-screw kneader, it is preferable, for efficient residence of the mixture inside the twin-screw kneader and promoted granulation, that at least one pair of a section formed of an element having a kneading function and another section constructed of an element having a backward transfer function is provided in the zone ex tending from the inlet for both the polymer slurry and the organic liquid to the discharge. As the element having the kneading function, it is possible to use the kneading element (3) or the forward transfer and kneading element (4). Of these, the kneading element (3) is preferred. As the element having the backward transfer function, the backward transfer element (2) or the backward transfer and kneading element (5) can be used. Of these, the backward transfer and kneading element (5) is preferred.

Although the addition of the organic liquid to the polymer slurry can be effected before they are fed into the twin-screw kneader, it is preferable to mix them only within the co-rotating twin-screw kneader by feeding them through different inlets.

A surfactant may be added in the granulation step in order to prevent coarsening of the particles thus granulated and/or to enhance the flow stability of the slurry containing granulated particles. The surfactant is preferably a surfactant that does not lose its interfacially-activating effects by the coagulant used, including by way of example anionic surfactants containing one or more sulfonic groups, such as sodium alkylsulfonates, sodium alkylallylsulfonates, sodium amidosulfonate, sodium dialkylsulfosuccinates, sodium alkylbenzenesulfonates and sodium alkylnaphthalenesulfonates; and partly-saponified polyvinyl alcohols.

The surfactant may be used in an amount of 0.05-2 wt.%, preferably 0.05-1.5 wt.% based on the organic liquid. Any amounts in excess of 2 wt.% are not preferred, because the polymer is obtained with a lower purity and may result in a product of increased cost. No particular limitation is imposed on the manner of addition of the surfactant. It can be added in a form either dissolved or dispersed in an organic liquid or water.

For further densification of polymer particles granulated continuously as described above, they are usually heated to a temperature above $(Tg - 10)°C$ so as to effect their heat treatment, wherein Tg is the glass transition temperature of the polymer. This treatment is called "solidification treatment". Although the temperature of the solidification treatment (hereinafter abbreviated as "solidification temperature") is dependent on the glass transition temperature of the polymer, it is generally conducted at 60-120°C, preferably 70-99°C, and the treatment time is about 1-60 minutes in terms of average residence time.

The present invention will hereinafter be described in further detail by the following examples.


Example 1

A graft polymer latex (solid content: 34 wt.%) was obtained by graft-polymerizing 10 parts by weight of methyl methacrylate and 10 parts by weight of styrene on 80 parts by weight of a rubber polymer which had a copolymerization composition of 75 wt.% of butadiene and 25 wt.% of styrene.

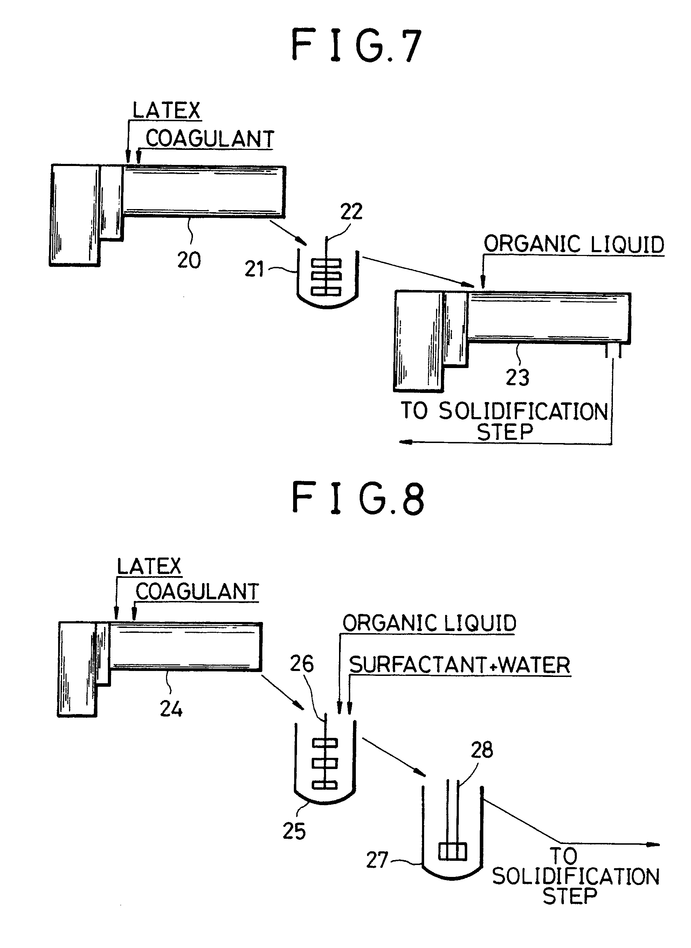

The polymer latex was processed using the apparatus illustrated in FIG. 7, in which numeral 20 indicates a co-rotating twin-screw kneader. The twin-screw kneader has a barrel diameter of 25 mm and an L/D ratio of 14. The kneader is schematically shown in FIGS. 1-3. The construction of its screws are summarized in Table 4. The individual elements of each screw have such shapes as shown in FIGS. 5(a) to 5(e), in which ℓ and t are 15 mm and 7.5 mm, respectively. Designated at numeral 21 is a buffer tank having a capacity of 2 ℓ, in which a stirrer 22 of the 6-blade fan turbine type is arranged centrally. Numeral 23 indicates a co-rotating twin-screw kneader of the type same type as the co-rotating twin-screw kneader 20. The construction of its screws is as indicated in Table 5.

The polymer latex was fed into the twin-screw kneader 20 through an inlet 9 by an unillustrated metering pump. A 0.49% aqueous solution of the predetermined amount of the coagulant was fed into the twin-screw kneader 20 through another inlet 8 by another unillustrated metering pump. The polymer latex was coagulated so that a polymer slurry was obtained. The polymer slurry which had been discharged through a discharge 12 was guided to the buffer tank 21, where its coagulation was brought to completion. The polymer slurry whose coagulation had been completed was allowed to overflow from the buffer tank 21 and was then fed to the twin-screw kneader 23 as a granulating apparatus.

The organic liquid was fed into the twin-screw kneader 23 by a further unillustrated metering pump and was mixed with the polymer slurry. The polymer slurry which had been granulated as a result of the kneading inside the twin-screw kneader was discharged as was. The slurry was heated to the solidification temperature (see Table 1) in an unillustrated vessel, dewatered and dried, whereby a particulate polymer was obtained. Operation conditions are shown in Table 1. The organic liquid used was normal-heptane, whose azeotropic temperature A with water is 79° C.

The bulk specific gravity, average particle size, particle size distribution and particle uniformity ratio of the resultant particulate polymer were measured. The results are shown in Table 3.

The bulk specific gravity was measured in accordance with JIS-K-6721, while the flowability was determined by placing the particulate material in a bulk specific gravity meter employed in JIS K-6721, observing the outflow state upon removal of a damper, and then judging the flowability on the basis of the following standard.

Outflow state:

A: Sample flowed out naturally as soon as the damper was removed.
B: Sample flowed out when impacted once.
C: Sample flowed out when impacted repeatedly.
D: Sample not flowed out even after repeated impacts.

Further, the average particle size $D_{50}$ indicates the weight-base median diameter. In addition, the uniformity ratio N of the particles is expressed by the following equation:

$N = D_{75}/D_{25}$

wherein $D_{75}$ indicates the particle size ($\mu$m) at 75 % of a cumulative weight distribution curve of the particles and $D_{25}$ means the particle size ($\mu$m) at 25% of the cumulative weight distribution curve. These measurement methods were used commonly in the subsequent examples and comparative examples.

Example 2

A graft polymer latex (solid content: 34 wt.%) was obtained by graft-polymerizing 15 parts by weight of methyl methacrylate and 15 parts by weight of styrene on 70 parts by weight of a rubber polymer which had a copolymerization composition of 75 wt.% of butadiene and 25 wt.% of styrene.

The polymer latex was processed using the same apparatus as in Example 1, whereby a granular polymer was obtained. Operation conditions are shown in Table 1. The evaluation results of the particulate polymer thus obtained are given in Table 3.

Example 3

The graft polymer latex employed in Example 1 was processed using the apparatus depicted in FIG. 8, in which numeral 24 indicates the same apparatus as the twin-screw kneader 20 used in Example 1 and mixing tank 25 and stirrer 26 are also the same apparatus as the buffer tank 21 and stirrer 22 in Example 1. Further, designated at numeral 27 is a buffer tank whose capacity is 2 ℓ. A homomixer 28 ("Table-Top Model M", trade name; manufactured by Tokushu Kiki Kogyo Co., Ltd.) is arranged centrally in the buffer tank 27.

The polymer latex was fed into the twin-screw kneader 24 through an inlet 8 by an unillustrated metering pump. A 0.49% aqueous solution of the predetermined amount of the coagulant was fed into the co-rotating twin-screw kneader 24 through another inlet 9 by another unillustrated metering pump. The polymer latex was therefore coagulated so that a polymer slurry was obtained. The polymer slurry which had been discharged through a discharge 12 was guided to the mixing tank 25. To the mixing tank 25, the organic liquid and a solution of a surfactant in water were supplied by unillustrated metering pumps, respectively. A slurry which had been discharged from the mixing tank 25 was guided to the buffer tank 27, where its granulation was brought to completion. A slurry which had been discharged from the buffer tank 27 was heated to its solidification temperature in an unillustrated vessel, dewatered and dried, whereby a particulate polymer was obtained. Operation conditions are shown in Table 2. Evaluation results of the particulate polymer thus obtained are given in Table 3.

Example 4

By using the same graft polymer latex used in Example 2, a particulate polymer was obtained in the same manner as in Example 3. The production conditions and the properties of the resulting particulate polymer are shown in Table 2 and Table 3, respectively.

Example 5

A copolymer latex (solid content: 27.8 wt.%) composed of 85 wt.% of methyl methacrylate and 15 wt.% of butyl acrylate was formed by emulsion polymerization. The latex was treated using the same apparatus as in Example 1, whereby a granular polymer was obtained. Operation conditions are shown in Table 1. Evaluation results of the particulate polymer thus obtained are given in Table 3. The azeotropic temperature A of normal hexane, which was employed as the organic liquid, with water is 61°C.

Examples 6 and 7

Using the same apparatus as in Example 1 except that the revolution speed of the screws of the twin-screw kneader 20 in FIG. 7 was set at 350 rpm in Example 5 and at 500 rpm in Example 6, portions of the polymer latex were processed, whereby particulate polymers were obtained. Operation conditions are shown in Table 1. Evaluation results of the thus-obtained particulate polymers are given in Table 3. The average particle sizes of the particulate polymers thus obtained increased as the revolution speed of the screws became faster. It has therefore been found that the particle size can be controlled by changing the revolution speed of the screws of the twin-screw kneader 20.

Examples 8 and 9

Using the same apparatus as in Example 1 except that the construction of the screws of the twin-screw kneader 20 in FIG. 7 was modified as shown in Table 6 and Table 7, respectively, portions of the polymer latex were processed, whereby particulate polymers were obtained. Operation conditions are shown in Table 1. Evaluation results of the thus-obtained particulate polymers are given in Table 3. The average particle sizes of the resultant particulate polymers were both greater than that of the particulate polymer obtained in Example 1. It has hence been found that the particle size can be controlled by modifying the construction of the screws of the twin-screw kneader 20.

Example 10

A graft polymer latex (solid content: 40 wt.%) was obtained by graft-polymerizing 15 parts by weight of methyl methacrylate and 25 parts by weight of styrene on 60 parts by weight of a rubber polymer which had a copolymerization composition of 75 wt.% of butadiene and 25 wt.% of styrene. The latex was fed into the twin-screw kneader 20 through the inlet 10. The polymer latex was processed in the same apparatus as in Example 1 except that the construction of the screws of the twin-screw kneader 20 was modified as shown in Table 8, whereby a particulate polymer was obtained. Operation conditions are shown in Table 1. Evaluation results of the particulate polymer thus obtained are given in Table 3.

Example 11

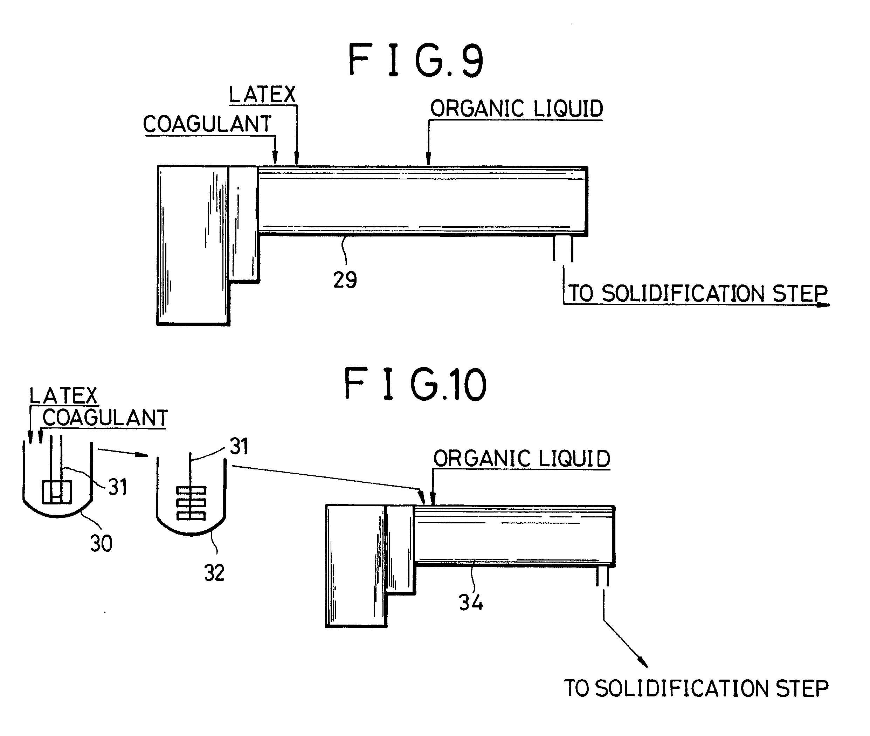

The polymer latex employed in Example 1 was processed using the apparatus shown in FIG. 9, in which numeral 29 indicates a co-rotating twin-screw kneader. The co-rotating twin-screw kneader has a barrel diameter of 25 mm and an L/D ratio of 14. The construction of its screws are summarized in Table 9.

Into the twin-screw kneader 29, were supplied a 1.8% aqueous solution of the predetermined amount of the coagulant through an inlet 8 by an unillustrated metering pump and the polymer latex through another inlet 9 by another metering pump. The polymer latex was therefore coagulated into a polymer slurry. On the other hand, the organic liquid was fed into the twin-screw kneader 29 through a further inlet 10 by a further unillustrated metering pump, so that the organic liquid was mixed with the polymer slurry.

The polymer slurry which had been granulated as a result of the kneading in the twin-screw kneader was discharged as it was. The slurry was heated to the solidification temperature (see Table 10) in an unillustrated vessel, dewatered and dried, whereby a particulate polymer was obtained. Operation conditions are shown in Table 1. Evaluation results of the particulate polymer thus obtained are given in Table 3.

Comparative Example 1

The polymer latex was processed under similar conditions to Example 1 except that a vessel having a capacity of 2 ℓ and a stirrer of the 6-blade fan turbine type installed centrally was used instead of the twin-screw kneader 20 shown in FIG. 7. The resulting polymer slurry was not allowed to overflow stably, the discharge of the vessel was blocked, and moreover the coagulation was unstable.

Examples 12-15

The polymer latex employed in Example 1 was processed using the apparatus shown in FIG. 10, in which numerals 30 and 31 indicate the same apparatus as the stirring tank 27 and the stirrer 28 used in Example 3, numerals 32 and 33 indicate the same apparatus as the buffer tank 21 and stirrer 22 used in Example 1, and numeral 34 indicates the same apparatus as the co-rotating twin-screw kneader used in Example 1.

The polymer latex and the coagulant were supplied to the stirring tank 30 by unillustrated separate metering pumps. The polymer latex was coagulated into a polymer slurry. The polymer slurry overflowed the stirring tank 30 and was fed to the buffer tank 32 to complete its coagulation. After completion of coagulation, the polymer slurry overflowed the buffer tank 32 and was fed into the co-rotating twin-screw kneader 34 through the inlet 8. The organic liquid was also fed into the twin-screw kneader through another inlet 9 by an unillustrated metering pump for mixing with the polymer latex. The granulated polymer slurry mixed by the co-rotating twin-screw kneader was discharged as a polymer slurry. Then the polymer slurry was heated to its solidification temperature which is shown in Table 1, dewatered and dried, whereby a particulate polymer was obtained. The operation conditions are shown in Table 11 and the evaluation results of the resulting particulate polymer are shown in Table 12.

The bulk specific gravity of the resulting particulate polymer was higher than in Comparative Example 2, and its flowability was also improved. Thus, it is clear that the specific gravity and the flowability of the particulate polymer can be improved by using a co-rotating twin-screw kneader as the granulation apparatus.

Comparative Example 2

The polymer latex was processed under similar conditions to Example 12 except that a vessel having a capacity of 2 ℓ with a centrally installed stirrer of the 6-blade fan turbine type was used instead of the co-rotating twin-screw kneader 34 shown in FIG. 10. The evaluation results of the resulting particulate polymer are shown in Table 12.

Comparative Example 3

The polymer latex was processed in the same manner as in Example 12 except that the amount of the organic liquid (n-heptane) used was changed to 10 parts by weight.

The resulting particulate polymer contains large amount of fine powder and its flowability was inferior.

Comparative Example 4

The polymer latex was processed in the same manner as in Example 12 except that the amount of the organic liquid (n-heptane) used was changed to 300 parts by weight.

In this case, the polymer became a continuous mass and a particulate polymer could not be obtained.

The production process of the present invention has made it possible to produce a particulate polymer containing fine powder in a small amount and having a narrow particle size distribution by using a relatively small amount of an organic liquid and further, to pro duce such a particulate polymer, especially, in a continuous manner.

Table 1

| Example No. | | 1 | 2 | 5 | 6 | 7 | 8 | 9 | 10 |
|---|---|---|---|---|---|---|---|---|---|
| Amount of polymer latex fed (g/min) | | 100 | 100 | 100 | 100 | 100 | 100 | 100 | 100 |
| Coagulant | Kind | Dil.[3] $H_2SO_4$ | Dil.[3] $H_2SO_4$ | Dil.[4] $H_2SO_4$ | Dil.[3] $H_2SO_4$ | Dil.[3] $H_2SO_4$ | Dil.[3] $H_2SO_4$ | Dil.[3] $H_2SO_4$ | Dil.[3] $H_2SO_4$ |
| | Amount added (wt. parts)[1] | 206 | 206 | 360 | 206 | 206 | 206 | 206 | 250 |
| Organic liquid | Kind | n-Heptane | n-Heptane | n-Hexane | n-Heptane | n-Heptane | n-Heptane | n-Heptane | n-Heptane |
| | Amount added (wt. parts)[1] | 50 | 50 | 50 | 50 | 50 | 50 | 50 | 50 |
| Twin-screw kneader 20 | Temperature (°C) | 70 | 70 | 40 | 70 | 70 | 70 | 70 | 75 |
| | Screw revolution speed[2] | 200 | 200 | 200 | 350 | 500 | 200 | 200 | 200 |
| | Average residence time (min) | 0.9 | 0.9 | 0.9 | 0.9 | 0.9 | 0.9 | 0.9 | 0.2 |
| Buffer tank 21 | Temperature (°C) | 70 | 70 | 40 | 70 | 70 | 70 | 70 | 75 |
| | Stirrer revolution speed[2] | 1000 | 1000 | 1000 | 1000 | 1000 | 1000 | 1000 | 1000 |
| Twin-screw kneader 23 | Temperature (°C) | 70 | 70 | 55 | 70 | 70 | 70 | 70 | 75 |
| | Screw revolution speed[2] | 800 | 800 | 400 | 800 | 800 | 800 | 800 | 800 |
| | Average residence time (min) | 0.9 | 0.9 | 0.9 | 0.9 | 0.9 | 0.9 | 0.9 | 0.9 |
| Water content in the whole mixture (wt.%) | | 73 | 73 | 72 | 73 | 73 | 73 | 73 | 72 |
| Solidification temperature (°C) | | 95 | 95 | 95 | 95 | 95 | 95 | 95 | 95 |

1) per 100 parts by weight of the polymer.
2) rpm.
3) 0.49% aqueous solution of sulfuric acid.
4) 0.278% aqueous solution of sulfuric acid.

EP 0 423 759 A2

Table 2

| Example No. | | 3 | 4 |
|---|---|---|---|
| Amount of polymer latex fed (g/min) | | 100 | 100 |
| Coagulant | Kind | Dilute[3] $H_2SO_4$ | Dilute[3] $H_2SO_4$ |
| | Amount added (wt. parts)[1] | 206 | 206 |
| Organic liquid | Kind | n-Heptane | n-Heptane |
| | Amount added (wt. parts)[1] | 50 | 50 |
| Twin-screw kneader 20 | Temperature (°C) | 70 | 70 |
| | Screw revolution speed[2] | 200 | 200 |
| | Average residence time (min) | 0.9 | 0.9 |
| Granulating tank 25 | Temperature (°C) | 70 | 70 |
| | Stirrer revolution speed[2] | 1000 | 1000 |
| | Average residence time (min) | 10 | 10 |
| Buffer tank 27 | Temperature (°C) | 70 | 70 |
| | Stirrer revolution speed[2] | 10000 | 10000 |
| | Average residence time (min) | 10 | 10 |
| Water content in the whole mixture(wt.%) | | 73 | 73 |
| Solidification temperature (°C) | | 95 | 95 |

1) per 100 parts by weight of the polymer.
2) rpm.
3) 0.49% aqueous solution of sulfuric acid.

## Table 3

| Example No. | | 1 | 2 | 3 | 4 | 5 | 6 | 7 | 8 | 9 | 10 | 11 |
|---|---|---|---|---|---|---|---|---|---|---|---|---|
| Particle size distribution (%) | ≥ 850 μm | 0 | 0 | 0 | 0 | 0 | 2.3 | 2.2 | 0.4 | 9.1 | 0 | 4.3 |
| | 850 - 500 μm | 3.1 | 4.0 | 9.7 | 2.8 | 1.3 | 12.6 | 22.9 | 11.4 | 24.3 | 3.2 | 13.3 |
| | 500 - 212 μm | 33.0 | 29.4 | 36.2 | 32.2 | 15.2 | 46.8 | 47.4 | 46.1 | 39.5 | 23.1 | 42.1 |
| | 212 - 106 μm | 44.6 | 40.9 | 33.5 | 38.0 | 49.5 | 29.9 | 21.8 | 32.8 | 22.1 | 49.5 | 27.8 |
| | 106 - 37 μm | 19.2 | 24.5 | 17.9 | 24.9 | 33.1 | 8.1 | 5.5 | 9.0 | 4.6 | 23.8 | 11.6 |
| | ≤ 37 μm | 0.1 | 1.2 | 2.7 | 2.1 | 0.9 | 0.3 | 0.2 | 0.3 | 0.4 | 0.4 | 0.9 |
| Average particle size (μm) | | 175 | 160 | 190 | 165 | 129 | 240 | 311 | 239 | 332 | 153 | 251 |
| Uniformity ratio of particles | | 2.3 | 2.4 | 2.7 | 2.7 | 2.0 | 2.5 | 2.5 | 2.4 | 2.9 | 2.1 | 2.8 |
| Bulk specific gravity (g/cm$^3$) | | 0.32 | 0.32 | 0.28 | 0.27 | 0.39 | 0.32 | 0.32 | 0.33 | 0.32 | 0.31 | 0.36 |
| Flowability | | A | A | B | B | A | A | A | A | A | A | A |

Table 4

| Section | Type of element | Section length (L/D) | Corresponding position |
|---------|-----------------|----------------------|------------------------|
| 1 | (1) Forward transfer | 2.3 | Inlets 8,9 |
| 2 | (3) Kneading | 2.6 | |
| 3 | (4) Forward transfer and kneading | 0.9 | |
| 4 | (3) Kneading | 2.6 | |
| 5 | (4) Forward transfer and kneading | 0.9 | |
| 6 | (3) Kneading | 2.3 | |
| 7 | (1) Forward transfer | 1.2 | Discharge 12 |
| 8 | (2) Backward transfer | 1.2 | |

Table 5

| Section | Type of element | Section length (L/D) | Corresponding position |
|---------|-----------------|----------------------|------------------------|
| 1 | (1) Forward transfer | 2.3 | Inlets 8,9 |
| 2 | (4) Forward transfer and kneading | 1.2 | |
| 3 | (3) Kneading | 2.3 | |
| 4 | (4) Forward transfer and kneading | 0.6 | |
| 5 | (3) Kneading | 2.0 | |
| 6 | (4) Forward transfer and kneading | 0.6 | |
| 7 | (3) Kneading | 2.0 | |
| 8 | (5) Backward transfer and kneading | 0.6 | |
| 9 | (1) Forward transfer | 1.2 | Discharge 12 |
| 10 | (2) Backward transfer | 1.2 | |

Table 6

| Section | Type of element | Section length (L/D) | Corresponding position |
|---------|-----------------|----------------------|------------------------|
| 1 | (1) Forward transfer | 3.5 | Inlets 8,9 |
| 2 | (3) Kneading | 1.8 | |
| 3 | (4) Forward transfer and kneading | 0.9 | |
| 4 | (3) Kneading | 1.8 | |
| 5 | (4) Forward transfer and kneading | 0.9 | |
| 6 | (3) Kneading | 1.8 | |
| 7 | (1) Forward transfer | 2.3 | Discharge 12 |
| 8 | (2) Backward transfer | 1.2 | |

Table 7

| Section | Type of element | Section length (L/D) | Corresponding position |
|---------|-----------------|----------------------|------------------------|
| 1 | (1) Forward transfer | 6.4 | Inlets 8,9 |
| 2 | (3) Kneading | 1.8 | |
| 3 | (4) Forward transfer and kneading | 0.9 | |
| 4 | (3) Kneading | 1.5 | |
| 5 | (1) Forward transfer | 2.3 | Discharge 12 |
| 6 | (2) Backward transfer | 1.2 | |

19

Table 8

| Section | Type of element | Section length (L/D) | Corresponding position |
|---|---|---|---|
| 1 | (1) Forward transfer | 12.8[1] | Inlets 8,9 Discharge 12 |
| 2 | (2) Backward transfer | 1.2 | |

1) L/D of the section from the inlet 10 to the discharge 12 is 2.3.

TABLE 9

| Section | Type of element | Section length (L/D) | Corresponding position |
|---|---|---|---|
| 1 | (1) Forward transfer | 2.3 | Inlets 8,9 |
| 2 | (3) Kneading | 2.0 | |
| 3 | (4) Forward transfer and kneading | 0.6 | |
| 4 | (3) Kneading | 2.6 | |
| 5 | (4) Forward transfer and kneading | 0.9 | Inlet 10 |
| 6 | (3) Kneading | 2.6 | |
| 7 | (5) Backward transfer and kneading | 0.6 | |
| 8 | (1) Forward transfer | 1.2 | Discharge 12 |
| 9 | (2) Backward transfer | 1.2 | |

Table 10

| Example No. | | 11 |
|---|---|---|
| Amount of polymer latex fed (g/min) | | 100 |
| Coagulant | Kind | Dilute[3] $H_2SO_4$ |
| | Amount added (wt. parts)[1] | 56 |
| Organic liquid | Kind | n-Heptane |
| | Amount added (wt. parts)[1] | 50 |
| Twin-screw kneader 29 | Temperature (°C) | 70 |
| | Screw revolution speed[2] | 430 |
| | Average residence time (min) | 1.2 |
| Water content in the whole mixture (wt.%) | | 63 |
| Solidification temperature (°C) | | 95 |

1) per 100 parts by weight of the polymer.
2) rpm.
3) 1.8% aqueous solution of sulfuric acid.

22

Table 11

| Example No. | | 12 | 13 | 14 | 15 |
|---|---|---|---|---|---|
| Amount of polymer latex fed (g/min) | | 100 | 100 | 100 | 100 |
| Coagulant | Kind | Dilute[3] $H_2SO_4$ | Dilute[3] $H_2SO_4$ | Dilute[3] $H_2SO_4$ | Dilute[3] $H_2SO_4$ |
| | Amount added (wt. parts)[1] | 250 | 250 | 250 | 250 |
| Organic liquid | Kind | n-Heptane | n-Heptane | n-Hexane | n-Heptane |
| | Amount added (wt. parts)[1] | 50 | 30 | 80 | 150 |
| Stirring tank 30 | Temperature (°C) | 60 | 60 | 60 | 60 |
| | Stirrer revolution speed[2] | 9000 | 9000 | 9000 | 9000 |
| Buffer tank 32 | Temperature (°C) | 75 | 75 | 75 | 75 |
| | Stirrer revolution speed[2] | 1000 | 1000 | 1000 | 1000 |
| Twin-screw kneader 34 | Temperature (°C) | 75 | 75 | 75 | 75 |
| | Screw revolution speed[2] | 800 | 800 | 800 | 800 |
| | Average residence time (min) | 0.9 | 0.9 | 0.9 | 0.9 |
| Water content in the whole mixture (wt.%) | | 72 | 75 | 69 | 61 |
| Solidification temperature (°C) | | 95 | 95 | 95 | 95 |

1) per 100 parts by weight of the polymer.
2) rpm.
3) 1% aqueous solution of sulfuric acid.
4) 0.278% aqueous solution of sulfuric acid.

EP 0 423 759 A2

Table 12

| Example No. | | | Example | | | | Comp. Ex. | |
|---|---|---|---|---|---|---|---|---|
| | | | 12 | 13 | 14 | 15 | 2 | 3 |
| Particle size distribution (%) | | ≥ 850 µm | 0 | 0 | 0.5 | 1.2 | 0 | 0 |
| | | 850 - 500 µm | 1.2 | 0.3 | 5.5 | 11.4 | 1.5 | 1.7 |
| | | 500 - 212 µm | 19.7 | 7.1 | 53.2 | 68.2 | 21.0 | 10.3 |
| | | 212 - 106 µm | 60.4 | 39.8 | 38.0 | 18.8 | 61.1 | 22.3 |
| | | 106 - 37 µm | 18.5 | 46.5 | 2.8 | 0.4 | 15.9 | 34.2 |
| | | ≤ 37 µm | 0.2 | 6.3 | 0 | 0 | 0.5 | 31.5 |
| Average particle size ( µm) | | | 150 | 95 | 240 | 300 | 162 | 74 |
| Uniformity ratio of particles | | | 2.0 | 2.1 | 1.8 | 1.8 | 2.0 | 2.3 |
| Bulk specific gravity (g/cm$^3$) | | | 0.37 | 0.33 | 0.38 | 0.38 | 0.26 | 0.25 |
| Flowability | | | A | A | A | A | C | D |

A process is disclosed for the production of a particulate polymer which contains fine particles in a small amount and has a narrow particle size distribution. According to the process, a coagulant is added to a polymer latex which has been obtained by emulsion polymerization, and they are mixed together to form a polymer slurry. An organic liquid, said organic liquid being almost insoluble in water and incapable of dissolving the polymer but capable of wetting the polymer, is added to the polymer slurry, and they are mixed together to granulate polymer particles contained in the polymer slurry. At least one of the mixing step of the polymer latex and the coagulant and the mixing step of the polymer slurry and the organic liquid is conducted in a co-rotating twin-screw kneader.

## Claims

1. A process for producing a particulate polymer by adding a coagulant to a polymer latex, said latex having been obtained by emulsion polymerization, and mixing the coagulant and polymer latex together to form a polymer slurry, and then adding an organic liquid, said organic liquid being almost insoluble in water and incapable of dissolving the polymer but capable of wetting the polymer, to the polymer slurry and mixing the organic liquid and the polymer slurry together to granulate polymer particles contained in the polymer slurry, wherein at least one of the mixing step of the polymer latex and the coagulant and the mixing step of the polymer slurry and the organic liquid is conducted in a co-rotating twin-screw kneader.

2. The process of claim 1, wherein the mixing step of the polymer latex and the coagulant is conducted in the co-rotating twin-screw kneader.

3. The process of claim 1, wherein the mixing step of the polymer slurry and the organic liquid is conducted in the co-rotating twin-screw kneader.

4. The process of claim 1, wherein the mixing step of the polymer latex and the coagulant and the mixing step of the polymer slurry and the organic liquid are continuously conducted by commonly using a co-rotating twin-screw kneader.

5. The process of claim 1, wherein the mixing step of the polymer latex and the coagulant and the mixing step of the polymer slurry and the organic liquid are conducted by using separate co-rotating twin-screw kneaders, respectively.

6. The process of claim 1, wherein the organic liquid is added in an amount of 15-200 parts by weight per 100 parts by weight of the polymer in the polymer slurry.

7. The process of claim 1, wherein the organic liquid is added in an amount of at least 20 parts by weight but less than 60 parts by weight per 100 parts by weight of the polymer in the polymer slurry.

8. The process of claim 2 or 4, wherein in co-rotating the twin-screw kneader,

(a) each of the screws comprises an element having a forward transfer function in a zone where the polymer latex and the coagulant are fed; and

(b) the ratio, L/D, ranges from 2 to 40 in which L represents the distance (mm) from a position, where the polymer latex and the coagulant are fed, to another position where the resulting mixture is discharged and D represents the diameter (mm) of the screws.

9. The process of claim 3, wherein in the co- rotating twin-screw kneader,

(a) each of the screws comprises an element having a forward transfer function in a zone where the polymer slurry and the organic liquid are fed;

(b) each of the screws has at least one pair of a section formed of an element having a mixing function and another section formed of an element having a backward transfer function in a zone from a position, where the polymer slurry and the organic liquid are fed, to another position where the resulting mixture is discharged; and

(c) the ratio, L/D, ranges from 2 to 40 in which L represents the distance (mm) from a position, where the polymer slurry and the organic liquid are fed, to another position where the resulting mixture is discharged and D represents the diameter (mm) of the screws.

10. The process of claim 1, wherein water amount to 30-85 wt.% of the whole mixture obtained after the addition of the organic liquid.

11. The process of claim 3 or 4, wherein the whole mixture in the co-ratating twin-screw kneader, said mixture having been obtained after the addition of the organic liquid, is maintained for 5 seconds to 5 minutes at a temperature T ($^\circ$C) represented by the fol lowing formula:

$$A\text{-}40 \leqq T \leqq A$$

wherein A represents the azeotropic temperature ($^\circ$C) of the mixture.

# F I G.1

# F I G.2

# F I G.3

# F I G.4(a)

# F I G.4(b)

# F I G.5(a)

# F I G.5(b)

# F I G.5(c)

16

t

# F I G.5(d)

16

t

# F I G.5(e)

t

16

# F I G.6

16

14      15

# F I G.7

LATEX
COAGULANT

ORGANIC LIQUID

20

21

22

23

TO SOLIDIFICATION
STEP

# F I G.8

LATEX
COAGULANT

ORGANIC LIQUID

SURFACTANT+WATER

24

26

25

27

28

TO
SOLIDIFICATION
STEP

# F I G.9

COAGULANT → LATEX

ORGANIC LIQUID

29

TO SOLIDIFICATION STEP

# F I G.10

LATEX
COAGULANT

31

31

30

32

ORGANIC LIQUID

34

TO SOLIDIFICATION STEP

EP 0 423 759 A2